# FASCICULE DE BREVET EUROPEEN

(11) **EP 2 326 681 B1**
(45) Date de publication et mention de la délivrance du brevet: **27.03.2019**
(21) Numéro de dépôt: 09783415.4
(22) Date de dépôt: 25.09.2009
(51) Int. Cl.: C08G 69/26, C08G 69/36, C08G 69/28

(54) **POLYAMIDE MODIFIE, PROCEDE DE PREPARATION, ARTICLE OBTENU A PARTIR DE CE POLYAMIDE**
MODIFIZIERTES POLYAMID, HERSTELLUNGSVERFAHREN DAFÜR UND AUS DEM POLYAMID ERHALTENER GEGENSTAND
MODIFIED POLYAMIDE, METHOD FOR PREPARING SAME, AND ARTICLE OBTAINED FROM SAID POLYAMIDE

(30) Priorité: 26.09.2008 FR 0805300
(43) Date de publication de la demande: 01.06.2011
(73) Titulaire: Rhodia Opérations, 93306 Aubervilliers (FR)
(72) Inventeur: TOURAUD, Franck, F-38780 Eyzin Pinet (FR); JEOL, Stéphane, GA-30041 Cumming (US)
(74) Mandataire: Schuck, Alexander
(86) Numéro de dépôt international: PCT/EP2009/062438
(87) Numéro de publication internationale: WO 2010/034805

(56) Documents cités:
- JP-A- 2002 284 872
- JP-A- 2004 035 638
- US-A- 3 161 608
- US-A- 3 862 087
- US-A1- 2003 166 796

## Description

La présente invention concerne un polyamide modifié par un composé comprenant au moins un groupement hydroxyle, ainsi qu'un procédé de préparation de ce polyamide, et des articles obtenus à partir de ce polyamide modifié. L'invention concerne plus particulièrement un polyamide modifié par un composé contenant au moins un groupement hydroxyle aromatique et étant chimiquement lié à la chaîne polymère, obtenu par polymérisation de monomères de polyamide avec au moins un composé hydroxyaromatique difonctionnel, dont les deux fonctions peuvent réagir avec une fonction amine.

Les polymères thermoplastiques sont des matières premières susceptibles d'être transformées par moulage, moulage par injection, injection soufflage, extrusion, extrusion/soufflage ou filage, notamment en de multiples articles tels que des pièces, par exemple pour carrosserie, soufflées, extrudées, ou moulées, des fils, des fibres ou des films.

Le document US3161608 décrit des polyamides mordant pour la teinture de fibres textiles synthétiques. Ces polyamides comprenant une diamine et un acide dicarboxylique hydroxy- aromatique.

Le document US3862087 décrit pour sa part des polyamides de haut poids moléculaire UV absorbants.

Le document JP 2002/2848872 décrit une résine de polyamide dont le poids moléculaire est augmenté par réaction chimique d'un polyamide (A) obtenu par réaction d'un acide monocarboxylique ayant un groupe hydroxyle et d'un composé choisi parmi les monoamines ayant un groupe hydroxyle pour introduire un groupe hydroxyle terminal, avec (B) un agent de liaison moléculaire bifonctionnel.

Il existe au moins deux contraintes majeures dans toutes ces filières de transformation de polymère thermoplastique.

La première de ces contraintes est que les polymères thermoplastiques mis en oeuvre doivent être caractérisés, à l'état fondu, par une viscosité ou un comportement rhéologique compatible avec les procédés de mise en forme susvisés. Ces polymères thermoplastiques doivent être suffisamment fluides lorsqu'ils sont en fusion, pour pouvoir être acheminés et manipulés aisément et rapidement dans certaines machines de mise en forme.

L'autre contrainte qui pèse sur les compositions polymères thermoplastiques est liée aux qualités mécaniques qu'ils doivent présenter après avoir été fondus, mis en forme et durcis par refroidissement. Ces qualités mécaniques sont notamment les propriétés thermomécaniques.

Parmi les polymères thermoplastiques, les polyamides sont des polymères présentant un intérêt industriel et commercial important, en particulier les polyamides aliphatiques. Ces polyamides aliphatiques sont facilement synthétisables et transformables en voie fondue. Toutefois, on cherche toujours à améliorer leurs propriétés mécaniques, en particulier thermomécaniques. L'invention a pour principal objet un polyamide modifié par un composé contenant au moins un groupement hydroxyle aromatique chimiquement lié à la chaîne du polymère, le polyamide étant obtenu par polymérisation à partir d'au moins les monomères suivants :
i) A1) un composé hydroxyaromatique difonctionnel, dont les deux fonctions peuvent réagir avec une fonction amine, et
ii) au moins des monomères de polyamide choisi parmi :
   - B) un composé diacide carboxylique B1) qui est un diacide aliphatique ou cycloaliphatique, ou arylaliphatique, c'est-à-dire un diacide dont au moins une des fonctions acides n'est pas rattachée à un atome de carbone faisant partie d'un cycle aromatique ; et C) une diamine aliphatique, cycloaliphatique ou arylaliphatique, et
   - D) un lactame ou un aminoacide, de préférence aliphatique,
   où le monomère B est uniquement du type B1), la proportion molaire de monomère A1) par rapport au monomères A1) et B) est comprise entre 0,1 et 30%, avantageusement comprise entre 0,5 et 25%, de préférence comprise entre 5 et 20% ;
   le composé A1) est un composé de formule (I) suivante :

   (I) (HO)ₓ-Z-(COOH)₂

   dans laquelle Z est un radical hydrocarboné aromatique ou arylaliphatique multivalent (au moins trivalent) et x est compris entre 1 et 10.

Préférentiellement, le polyamide est obtenu par polymérisation d'au moins les monomères suivants :
- A1) un composé hydroxyaromatique difonctionnel, dont les deux fonctions peuvent réagir avec une fonction amine,
- éventuellement au moins un composé diacide carboxylique B1) qui est un diacide aliphatique ou cycloaliphatique, ou arylaliphatique,
- au moins une diamine C) aliphatique, cycloaliphatique ou arylaliphatique, et
- éventuellement un lactame ou un aminoacide D), de préférence aliphatique.

Le polyamide modifié de l'invention est facilement synthétisable et transformable en voie fondue, et il présente de meilleures propriétés mécaniques, en particulier thermomécaniques, qu'un polyamide non modifié.

Par « groupement hydroxyle aromatique », on entend une fonction hydroxyle rattachée à un atome de carbone faisant partie d'un cycle aromatique.

Par « composé hydroxyaromatique », on entend un composé comportant au moins un groupement hydroxyle aromatique.

Par « chimiquement lié » on entend lié par une liaison covalente.

Le composé hydroxyaromatique de l'invention est un composé organique comprenant au moins un groupement hydroxyle aromatique.

Les fonctions pouvant réagir avec une fonction amine sont notamment les fonctions acides, la fonction cétone et la fonction aldéhyde.

Par composé ayant une « fonction acide » on entend un composé organique comprenant une fonction acide carboxylique ou dérivée, telles que chlorure d'acide, anhydride, d'acide, amide, ester.

Les groupements hydroxyle aromatique de l'invention ne sont pas considérés comme des fonctions réagissant avec les fonctions acide.

Avantageusement le groupement hydroxyle du monomère A1) n'est pas encombré, c'est-à-dire par exemple que les atomes de carbone situés en a de la fonction hydroxyle ne sont de préférence pas substitués par des substituants encombrants, tels que des alkyles ramifiés.

Le composé A1) est un composé de formule (I) suivante :

(I) (HO)ₓ-Z-(COOH)₂

dans laquelle Z est un radical hydrocarboné aromatique ou arylaliphatique multivalent (au moins trivalent) et x est compris entre 1 et 10.

Z peut par exemple être un radical multivalent de benzène, de méthyle benzène, de naphtalène, de biphényle, de diphényle éther, de diphényle sulfure, de diphényle sulfone, de ditolyle éther, de xylylène, de diéthyl benzène, de pyridine etc.

Par « radical arylaliphatique » on entend un radical selon lequel au moins une fonction acide du composé de formule (I) n'est pas rattachée à ce radical par un atome de carbone faisant partie faisant partie d'un cycle aromatique. Avantageusement Z comporte entre 6 et 18 atomes de carbone.

Le composé A1) est de préférence choisi parmi le 2-hydroxytéréphtalique acide, le 5-hydroxyisophtalique acide, le 4-hydroxyisophtalique acide, le 2,5-dihydroxytéréphtalique acide.

Dans le cadre de l'invention, des mélanges de différents composés A1) peuvent être mis en oeuvre.

Le polyamide modifié de l'invention est obtenu à partir notamment d'un monomère diacide B) un composé diacide carboxylique qui est B1) un diacide aliphatique ou cycloaliphatique, ou arylaliphatique, c'est-à-dire un diacide dont au moins une des fonctions acides n'est pas rattachée à un atome de carbone faisant partie d'un cycle aromatique.

Avantageusement le composé B) est de formule (V) suivante :

HOOC-R'-COOH (V)

dans laquelle R' est un radical hydrocarboné divalent aliphatique, cycloaliphatique, ou arylaliphatique ou aromatique.

De préférence le radical R' comporte entre 2 et 18 atomes de carbone.

Par diacide arylaliphatique on entend un diacide dont au moins une des fonctions acide n'est pas rattachée à un atome de carbone faisant partie d'un cycle aromatique.

Selon un mode de réalisation particulier du procédé de l'invention, le composé B) est un diacide aliphatique. L'acide aliphatique peut par exemple être choisi parmi l'acide oxalique, maléique, succinique, pimélique, azélaïque. Il peut également comprendre des insaturations, c'est le cas par exemple de l'acide maléique ou fumarique.

Les acides dicarboxyliques peuvent également être choisis parmi l'acide glutarique, l'acide adipique, l'acide subérique, l'acide sébacique, l'acide dodécanedioïque ; l'acide 1,2-ou 1,3-cyclohexane dicarboxylique ; et l'acide 1,2- ou 1,3-cyclohexane diacétique, et l'acide 1,2-ou 1,3-phénylène diacétique. L'acide dicarboxylique préféré est l'acide adipique.

Dans le cadre de l'invention, des mélanges de différents composés B) peuvent être mis en oeuvre, notamment des mélanges de diacides aliphatiques et de diacides aromatiques.

Le monomère B) est uniquement du type B1). Il est également possible d'ajouter un monomère B2) diacide aromatique, tel que par exemple l'acide isophthalique ; l'acide téréphthalique ; l'acide 4,4'-benzophénone dicarboxylique; l'acide 2,5-naphthalène dicarboxylique; et l'acide p-t-butyl isophthalique.

La proportion molaire de monomère A1) par rapport au monomères A1), B1) et B2 est avantageusement comprise entre 0,1 et 30%, avantageusement comprise entre 0,5 et 25%, de préférence comprise entre 5 et 20%.

Le polyamide modifié de l'invention est également obtenu à partir d'un monomère C) diamine, aliphatique, cycloaliphatique ou arylaliphatique.

Les diamines utiles dans la présente invention ont avantageusement la formule H₂N-R-NH₂ (VI) dans laquelle R est un radical hydrocarboné divalent, en particulier un diradical aliphatique, ou arylaliphatique ou un dérivé substitué de ces diradicaux. Le radical R comporte avantageusement entre 2 et 18 atomes de carbone.

Par diamine arylaliphatique on entend une diamine dont au moins une des fonctions amine n'est pas rattachée à un atome de carbone faisant partie d'un cycle aromatique.

Des diamines aliphatiques convenables comprennent des diamines aliphatiques à chaîne droite, telles que le 1,10-diaminodécane, des diamines aliphatiques à chaîne ramifiée, telles que le 2-méthyl-1,6-diaminohexane, et des diamines cycloaliphatiques, telles que les di (aminométhyl) cyclohexanediamines.

La chaîne aliphatique peut contenir des hétéro-atomes tels que le soufre ou l'oxygène, tel que représenté par la 3,3'-éthylènedioxybis(propylamine), et elle peut aussi porter des substituants, tels que des atomes d'halogène, qui ne réagissent pas dans les conditions de polymérisation.

Les diamines peuvent par exemple être choisies parmi l'hexaméthylène diamine ; la butane diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la nonane diamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Des mélanges de diamines peuvent être aussi utilisés dans la présente invention.

Le polyamide modifié de l'invention peut être obtenu à partir notamment d'un monomère lactame ou un aminoacide D), de préférence aliphatique. Avantageusement le lactame ou aminoacide D) comporte entre 2 et 18 atomes de carbone. A titre d'exemple de tels lactames ou aminoacides, on peut citer le caprolactame, l'acide 6-aminohexanoïque, l'acide 5-aminopentanoïque, l'acide 7-aminoheptanoïque, l'acide aminoundécanoïque, le dodécanolactame.

Dans le cadre de l'invention, des mélanges de différents composés D) peuvent être mis en oeuvre.

L'invention concerne également un procédé de préparation du polyamide modifié décrit ci-dessus par polymérisation à l'état fondu des monomères du polyamide.

Par l'expression « polymérisation à l'état fondu » on entend que la polymérisation est réalisée à l'état liquide, et que le milieu de polymérisation ne contient pas de solvant autre que de l'eau, éventuellement. Le milieu de polymérisation peut par exemple être une solution aqueuse comprenant les monomères, ou un liquide comprenant les monomères.

Avantageusement le milieu de polymérisation comprend de l'eau comme solvant. Cela facilite l'agitation du milieu, et donc son homogénéité.

Le milieu de polymérisation peut également comprendre des additifs tels que des limiteurs de chaîne.

Le polyamide modifié de l'invention est généralement obtenu par polycondensation au moins entre les monomères A1), B), C) et D), présents en totalité ou en partie, pour former des chaînes polyamides, avec formation du produit d'élimination, en particulier l'eau, dont une partie peut se vaporiser.

Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau, présente initialement dans le milieu de polymérisation et/ou formée lors de la polycondensation, tout en évitant toute formation de phase solide afin d'éviter une prise en masse.

La réaction de polycondensation est généralement effectuée à une pression d'environ 0,5-2,5 MPa (0,5-3,5 MPa) à une température d'environ 100-320°C (180-300°C). La polycondensation est généralement poursuivie en phase fondue à pression atmosphérique ou réduite de manière à atteindre le degré d'avancement souhaité.

Le produit de polycondensation est un polymère ou prépolymère fondu. Il peut comprendre une phase vapeur essentiellement constituée de vapeur du produit d'élimination, en particulier d'eau, susceptible d'avoir été formée et/ou vaporisée.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 100°C et dans tous les cas supérieure à la température de solidification du polymère. Le temps de séjour dans le dispositif de finition est de préférence supérieur ou égal à 5 minutes.

Le produit de polycondensation peut également subir une étape de post-condensation en phase solide. Cette étape est connue de l'homme du métier et permet d'augmenter le degré de polycondensation à une valeur souhaitée.

Le procédé de l'invention est similaire dans ses conditions au procédé classique de préparation de polyamide du type de ceux obtenus à partir d'acides dicarboxyliques et de diamines, en particulier du procédé de fabrication de polyamide 66 à partir d'acide adipique et d'hexaméthylène diamine. Ce procédé de fabrication de polyamide 66 est connu de l'homme du métier. Le procédé de fabrication de polyamide du type de ceux obtenus à partir d'acides dicarboxyliques et de diamines utilise généralement comme matière première, un sel obtenu par un mélange en quantité stoechiométrique en général dans un solvant comme l'eau, d'un diacide avec une diamine. Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

Ainsi, lorsque le procédé de l'invention met en oeuvre un diacide B) et une diamine C), ces composés peuvent être introduits, au moins en partie, sous la forme d'un sel de composé B) et de composé C). En particulier lorsque le composé B) est l'acide adipique et le composé C) l'hexaméthylène diamine, ces composés peuvent être introduits au moins en partie sous forme de sel N. Ceci permet d'avoir un équilibre stoechiométrique. De même lorsque le composé A1) est un diacide, le composé A1) et la diamine C) peuvent être introduits sous forme de sel.

Le procédé de l'invention conduit généralement à un polymère statistique.

Le polyamide modifié obtenu à la fin de l'étape de finition peut être refroidi et mis sous forme de granulés.

Le polyamide modifié obtenu par le procédé de l'invention sous forme fondue peut être directement mis en forme ou être extrudé et granulé, pour une mise en forme ultérieure après fusion.

Le polyamide modifié de l'invention présente l'avantage d'être aisément transformable en voie fondue, comme les polyamides aliphatiques par exemple, ce qui facilite sa mise en forme. De plus il présente des propriétés thermomécaniques améliorées, par exemple ils présentent une température de transition vitreuse plus élevée que les polyamides aliphatiques. Enfin ils montrent de meilleures propriétés de reprise en eau par rapport aux polyamides aliphatiques.

Le polyamide de l'invention peut être sous forme d'une composition à base du polyamide modifié comme matrice et comprenant des additifs, tels que des charges de renfort, des ignifugeants, des stabilisants aux UV, à la chaleur, des matifiants tels que le dioxyde de titane, des pigments, des colorants etc..

Le polyamide modifié de l'invention peut être utilisé comme matière première dans le domaine des plastiques techniques, par exemple pour la réalisation d'articles moulés par injection ou par injection/soufflage, extrudés par extrusion classique ou par extrusion soufflage, ou de films ou poudres.

Le polyamide modifié de l'invention peut également être mis sous forme de fils, fibres, filaments par filage en fondu.

D'autres détails ou avantages de l'invention apparaîtront plus clairement à la vue des exemples donnés ci-dessous.

### EXEMPLES

### Caractérisations

Teneurs en groupements terminaux acide (GTC) et amine (GTA) : dosées par potentiométrie, exprimées en méq/kg.

Masse molaire moyenne en nombre déterminée par la formule Mn=2.10⁶/(GTA+GTC) et exprimées en g/mol.

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

Température de transition vitreuse (T_{g}) déterminées sur le même appareil à une vitesse de 40 °C/min.

### Exemple 1 comparatif : PA 66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®. Le polyamide 66 est fabriqué selon un procédé standard de polymérisation de type polyamide 66, avec 30 minutes de finition. Le polymère obtenu est coulé sous forme de jonc, refroidi et mis sous forme de granulé par coupe des joncs.

Le polymère obtenu présente les caractéristiques suivantes : à mi-coulée, GTC = 70,2 meq/kg, GTA = 51,5 meq/kg, Mn = 16430 g/mol.

Le polyamide 66 est semi-cristallin et a les caractéristiques thermiques suivantes : Tg= 70,6 °C, Tc= 230,9 °C, Tf= 263,7 °C, ΔHf = 68,4 J/g.

### Exemple 1 : préparation d'un copolyamide PA 66/6HIA 95/5 molaire

Dans un réacteur de polymérisation sont introduits 87,3 kg (332,8 mol) de sel N (sel 1:1 d'hexaméthylène diamine et d'acide adipique), 3219 g d'acide 5-hydroxyisophtalique à 99,5% (HIA) (17,6 mol), 6276 g d'une solution d'hexaméthylène diamine (HMD) en solution dans l'eau à 32,4 % en poids (17,4 mol) et 81,2 kg d'eau déminéralisée et 6,4 g d'agent antimousse Silcolapse 5020®. Le copolyamide est fabriqué selon un procédé standard de polymérisation de type polyamide 66, avec 35 minutes de finition. Le polymère obtenu est coulé sous forme de jonc, refroidi et mis sous forme de granulé par coupe des joncs.

Le polymère obtenu présente les caractéristiques suivantes : à mi-coulée, GTC = 78,4 meq/kg, GTA = 57,6 meq/kg, Mn = 14 700 g/mol.

Le copolyamide est semi-cristallin et a les caractéristiques thermiques suivantes : Tg= 76,8 °C, Tc= 218,4 °C, Tf= 256,2 °C, ΔHf = 62,5 J/g. Le copolyamide a une Tg supérieure de 6,2 °C par rapport à celle du PA 66.

### Exemple 2 : préparation d'un copolyamide PA 66/6HIA 85/15

Dans un réacteur de polymérisation sont introduits 76,9 kg (293,1 mol) de sel N (sel 1:1 d'hexaméthylène diamine et d'acide adipique), 9462 g d'acide 5-hydroxyisophtalique à 99,5% (HIA) (51,7 mol), 18624 g d'une solution d'hexaméthylène diamine (HMD) en solution dans l'eau à 32,25 % en poids (51,7 mol) et 72,6 kg d'eau déminéralisée et 6,4 g d'agent antimousse Silcolapse 5020®. Le copolyamide est fabriqué selon un procédé standard de polymérisation de type polyamide 66, avec 35 minutes de finition. Le polymère obtenu est coulé sous forme de jonc, refroidi et mis sous forme de granulé par coupe des joncs.

Le polymère obtenu présente les caractéristiques suivantes :
A mi-coulée, GTC = 82,7 meq/kg, GTA = 61,5 meq/kg, Mn = 13 870 g/mol.

Le copolyamide est semi-cristallin et a les caractéristiques thermiques suivantes : Tg= 85,8 °C, Tc= 186,2 °C, Tf= 240,4 °C, ΔHf = 41,9 J/g. Le copolyamide a une Tg supérieure de 15,2 °C par rapport à celle du PA 66.

### Exemples 3 et 4 : préparation de PA 66/6HIA 80/20 et 70/30

Dans les exemples 3 et 4 sont préparés, selon un procédé standard de polymérisation de type polyamide 66 comme dans l'exemple 1 mais avec 30 minutes de finition, des PA 66/6HIA de composition molaire 80/20 (exemple 3) et 70/30 (exemple 4).

Les compositions (toutes les compositions comprennent 2 g d'agent antimousse) et caractérisations de ces polymères sont mentionnées dans le tableau 1 suivant.

**Tableau 1**

| **Exemple** | **PA 66/6HIA (molaire)** | **Sel N (g)** | **HIA à 99% (g)** | **HMD à 32,54% dans l'eau (g)** | **Eau (g)** | **Mn g/mol** | **Tg (°C)** | **Tc (°C)** | **Tf (°C)** |
|---|---|---|---|---|---|---|---|---|---|
| 3 | 80/20 | 116,3 | 20,4 | 39,6 | 109,2 | 11900 | 86,2 | 174,7 | 232,2 |
| 4 | 70/30 | 100,2 | 30,1 | 58,5 | 96,1 | 11000 | 85,3 | 161,2 | 209,9 |

### Exemple 5 : préparation d'un polyamide PA 6/6HIA 90/10

Dans un réacteur de polymérisation sont introduits 102,87 g de caprolactame (0,9 mol), 18,50 g d'acide 5-hydroxyisophtalique à 99,6 % (HIA) (0,1 mol), 36,40 g d'une solution d'hexaméthylene diamine (HMD) en solution dans l'eau à 32,25 % en poids (0,1 mol) et 38,9 g d'eau déminéralisée et 2 g d'un agent antimousse. Le copolyamide est fabriqué selon un procédé standard de polymérisation de type polyamide 6. Le polymère obtenu est coulé sous forme de jonc, refroidi et mis sous forme de granulé par coupe des joncs. Les granulés sont lavés dans de l'eau chaude pour extraire le caprolactame et séchés avant analyses.

Le polymère obtenu présente les caractéristiques suivantes :
GTC = 113 meq/kg, GTA = 86,4 meq/kg, Mn = 10030g/mol.

Le polyamide PA 6/6HIA 90/10 est semi-cristallin et a les caractéristiques thermiques suivantes : Tg= 72,3 °C, Tf= 178,6 °C. Le copolyamide a une Tg supérieure de 14,8 °C par rapport à celle du PA 6 (Tg=57,5°C).

### Exemple 6: préparation d'un polyamide PA 66/6T/6HIA 58,5/31,5/10

Dans un réacteur de polymérisation sont introduits 84,06 g de sel N (0,32 mol), 48,73 g d'un sel 6T (sel 1:1 d'hexaméthylène diamine et d'acide téréphtalique) (0,17 mol), 10,06 g d'acide 5-hydroxyisophtalique à 99,6 % (HIA) (0,055 mol), 19,74 g d'une solution d'hexaméthylène diamine (HMD) en solution dans l'eau à 32,25 % en poids (0,055 mol) et 122,38 g d'eau déminéralisée et 2 g d'un agent antimousse. Le copolyamide est fabriqué selon un procédé standard de polymérisation de type polyamide 66 à une température finale de 290 °C, sans finition.

Le polymère obtenu est coulé sous forme de jonc, refroidi et mis sous forme de granulé par coupe des joncs. Les granulés sont lavés dans de l'eau chaude pour extraire le caprolactame et séchés avant analyses.

Le polymère obtenu présente les caractéristiques suivantes :
GTC = 119,5 meq/kg, GTA = 45,8 meq/kg, Mn = 12100 g/mol.

Le polyamide PA 66/6T/6HIA 58,5/31,5/10 est semi-cristallin et a les caractéristiques thermiques suivantes : Tg= 96,3 °C, Tc= 208,7 °C, Tf= 261,1 °C, ΔHf = 35,6 J/g. Le copolyamide a une Tg supérieure de + 26 °C par rapport à celle du PA 66.

## Revendications

1. Polyamide modifié par un composé contenant au moins un groupement hydroxyle aromatique chimiquement lié à la chaîne du polymère, le polyamide étant obtenu par polymérisation à partir d'au moins les monomères suivants :
i) A1) un composé hydroxyaromatique difonctionnel, dont les deux fonctions peuvent réagir avec une fonction amine, et
ii) au moins des monomères de polyamide choisi parmi :
- B) un composé diacide carboxylique qui est B1) un diacide aliphatique ou cycloaliphatique, ou arylaliphatique, c'est-à-dire un diacide dont au moins une des fonctions acides n'est pas rattachée à un atome de carbone faisant partie d'un cycle aromatique ; et C) une diamine aliphatique, cycloaliphatique ou arylaliphatique, et
- D) un lactame ou un aminoacide, de préférence aliphatique,
où le monomère B est uniquement du type B1), la proportion molaire de monomère A1) par rapport au monomères A1) et B) est comprise entre 0,1 et 30%, avantageusement comprise entre 0,5 et 25%, de préférence comprise entre 5 et 20% ;
le composé A1) est un composé de formule (I) suivante :
(I) (HO)ₓ-Z-(COOH)₂
dans laquelle Z est un radical hydrocarboné aromatique ou arylaliphatique multivalent (au moins trivalent) et x est compris entre 1 et 10.

2. Polyamide modifié selon la revendication 1, **caractérisé en ce que** Z comporte entre 6 et 18 atomes de carbone

3. Polyamide modifié selon la revendication 1 ou 2, **caractérisé en ce que** le composé A1) est choisi parmi le 2-hydroxytéréphtalique acide, le 5-hydroxyisophtalique acide, le 4-hydroxyisophtalique acide et le 2,5-dihydroxytéréphtalique acide.

4. Polyamide modifié selon l'une des revendications précédentes, **caractérisé en ce que** le composé B) est de formule (V) suivante :
HOOC-R'-COOH (V)
dans laquelle R' est un radical hydrocarboné divalent aliphatique, cycloaliphatique ou arylaliphatique.

5. Polyamide modifié selon la revendication 4, **caractérisé en ce que** le radical R' comporte entre 2 et 18 atomes de carbone.

6. Polyamide modifié selon la revendication 4 ou 5, **caractérisé en ce que** le composé B) est un diacide aliphatique.

7. Polyamide modifié selon l'une des revendications précédentes, **caractérisé en ce que** le composé C) est de formule (VI) suivante :
H₂N-R-NH₂ (VI)
dans laquelle R est un radical hydrocarboné divalent aliphatique, cycloaliphatique, ou arylaliphatique.

8. Polyamide modifié selon la revendication 7, **caractérisé en ce que** le radical R comporte entre 2 et 18 atomes de carbone.

9. Polyamide modifié selon l'une des revendications précédentes, **caractérisé en ce que** le lactame ou aminoacide D) comporte entre 2 et 18 atomes de carbone.

10. Procédé de préparation d'un polyamide modifié selon l'une des revendications précédentes par polymérisation à l'état fondu des monomères A1) et/ou B) et/ou C) et/ou D) décrits dans l'une des revendications précédentes.

11. Article obtenu par mise en forme à partir du polyamide modifié selon l'une des revendications 1 à 9, de préférence par moulage, moulage par injection, injection/soufflage extrusion/soufflage, extrusion ou filage.

## Patentansprüche

1. Polyamid, modifiziert durch eine Verbindung mit mindestens einer aromatischen Hydroxylgruppe, die chemisch an die Polymerkette gebunden ist, wobei das Polyamid durch Polymerisation ausgehend von mindestens den folgenden Monomeren erhalten wird:
i) A1) einer difunktionellen hydroxyaromatischen Verbindung, deren zwei Funktionen mit einer Aminfunktion reagieren können, und
ii) mindestens Polyamid-Monomeren, ausgewählt aus:
- B) einer Dicarbonsäureverbindung, bei der es sich um B1) eine aliphatische oder cycloaliphatische oder arylaliphatische Disäure handelt, d. h. eine Disäure, bei der mindestens eine der Säurefunktionen nicht an ein Kohlenstoffatom, das Teil eines aromatischen Rings ist, gebunden ist; und C) einem aliphatischen, cycloaliphatischen oder arylaliphatischen Diamin und
- D) einem Lactam oder einer Aminosäure, die vorzugsweise aliphatisch ist,
wobei das Monomer B ausschließlich vom Typ B1) ist, wobei der Molanteil von Monomer A1), bezogen auf die Monomere A1) und B), zwischen 0,1 und 30 %, vorteilhafterweise zwischen 0,5 und 25 % und vorzugsweise zwischen 5 und 20 % liegt;
es sich bei der Verbindung A1) um eine Verbindung der folgenden Formel (I) handelt:
(I) (HO)ₓ-Z-(COOH)₂,
worin Z für einen mehrwertigen (mindestens dreiwertigen) aromatischen oder arylaliphatischen Kohlenwasserstoffrest steht und x zwischen 1 und 10 liegt.

2. Modifiziertes Polyamid nach Anspruch 1, **dadurch gekennzeichnet, dass** Z zwischen 6 und 18 Kohlenstoffatome enthält.

3. Modifiziertes Polyamid nach Anspruch 1 oder 2, **dadurch gekennzeichnet, dass** die Verbindung A1) aus 2-Hydroxyterephthalsäure, 5-Hydroxyisophthalsäure, 4-Hydroxyisophthalsäure und 2,5-Dihydroxyterephthalsäure ausgewählt ist.

4. Modifiziertes Polyamid nach einem der vorhergehenden Ansprüche, **dadurch gekennzeichnet, dass** die Verbindung B) die folgende Formel (V) aufweist:
HOOC-R'-COOH (V),
worin R' für einen zweiwertigen aliphatischen, cycloaliphatischen oder arylaliphatischen Kohlenwasserstoffrest steht.

5. Modifiziertes Polyamid nach Anspruch 4, **dadurch gekennzeichnet, dass** der Rest R' zwischen 2 und 18 Kohlenstoffatome enthält.

6. Modifiziertes Polyamid nach Anspruch 4 oder 5, **dadurch gekennzeichnet, dass** es sich bei der Verbindung B) um eine aliphatische Disäure handelt.

7. Modifiziertes Polyamid nach einem der vorhergehenden Ansprüche, **dadurch gekennzeichnet, dass** die Verbindung C) die folgende Formel (VI) aufweist:
H₂N-R-NH₂ (VI),
worin R für einen zweiwertigen aliphatischen, cycloaliphatischen oder arylaliphatischen Kohlenwasserstoffrest steht.

8. Modifiziertes Polyamid nach Anspruch 7, **dadurch gekennzeichnet, dass** der Rest R zwischen 2 und 18 Kohlenstoffatome aufweist.

9. Modifiziertes Polyamid nach einem der vorhergehenden Ansprüche, **dadurch gekennzeichnet, dass** das Lactam oder die Aminosäure D) zwischen 2 und 18 Kohlenstoffatome aufweist.

10. Verfahren zur Herstellung eines modifizierten Polyamids nach einem der vorhergehenden Ansprüche durch Schmelzepolymerisation der Monomere A1) und/oder B) und/oder C) und/oder D) gemäß einem der vorhergehenden Ansprüche.

11. Artikel, erhalten durch Formen aus einem modifizierten Polyamid nach einem der Ansprüche 1 bis 9, vorzugsweise durch Abformen, Spritzguss, Spritzblasen, Extrusionsblasen, Extrusion oder Spinnen.

## Claims

1. Polyamide modified by a compound comprising at least one aromatic hydroxyl group chemically bonded to the chain of the polymer, the polyamide being obtained by polymerization starting from at least the following monomers:
i) A1) a difunctional hydroxyaromatic compound, the two functional groups of which can react with an amine functional group, and
ii) at least polyamide monomers chosen from:
- B) a dicarboxylic acid compound which is B1), an aliphatic or cycloaliphatic or arylaliphatic diacid, that is to say a diacid, at least one of the acid functional groups of which is not attached to a carbon atom forming part of an aromatic ring, and C) an aliphatic, cycloaliphatic or arylaliphatic diamine, and
- D) a lactam or an amino acid, preferably one which is aliphatic,
where the monomer B is solely of the B1) type, the molar proportion of monomer A1) with respect to the monomers A1) and B) is between 0.1 and 30%, advantageously between 0.5 and 25% and preferably between 5 and 20%,
the compound A1) is a compound of following formula (I):
(I) (HO)ₓ-Z-(COOH)₂
in which Z is a polyvalent (at least trivalent) aromatic or arylaliphatic hydrocarbon radical and x is between 1 and 10.

2. Modified polyamide according to Claim 1, **characterized in that** Z comprises between 6 and 18 carbon atoms.

3. Modified polyamide according to Claim 1 or 2, **characterized in that** the compound A1) is chosen from 2-hydroxyterephthalic acid, 5-hydroxyisophthalic acid, 4-hydroxyisophthalic acid and 2,5-dihydroxyterephthalic acid.

4. Modified polyamide according to one of the preceding claims, **characterized in that** the compound B) is of following formula (V):
HOOC-R'-COOH (V)
in which R' is a divalent aliphatic, cycloaliphatic or arylaliphatic hydrocarbon radical.

5. Modified polyamide according to Claim 4, **characterized in that** the R' radical comprises between 2 and 18 carbon atoms.

6. Modified polyamide according to Claim 4 or 5, **characterized in that** the compound B) is an aliphatic diacid.

7. Modified polyamide according to one of the preceding claims, **characterized in that** the compound C) is of following formula (VI):
H₂N-R-NH₂ (VI)
in which R is a divalent aliphatic, cycloaliphatic or arylaliphatic hydrocarbon radical.

8. Modified polyamide according to Claim 7, **characterized in that** the R radical comprises between 2 and 18 carbon atoms.

9. Modified polyamide according to one of the preceding claims, **characterized in that** the lactam or amino acid D) comprises between 2 and 18 carbon atoms.

10. Process for the preparation of a modified polyamide according to one of the preceding claims by melt polymerization of the monomers A1) and/or B) and/or C) and/or D) described in one of the preceding claims.

11. Article obtained by forming starting from the modified polyamide according to one of Claims 1 to 9, preferably by molding, injection molding, injection/blow molding, extrusion/blow molding, extrusion or spinning.
